# EUROPEAN PATENT APPLICATION

(11) **EP 3 826 128 A1**
(43) Date of publication of application: **26.05.2021**
(21) Application number: 18926679.4
(22) Date of filing: 20.07.2018
(51) Int. Cl.: H02J 7/00

(54) **CHARGING/DISCHARGING DEVICE, CHARGING METHOD, AND HANDHELD PAN-TILT COMPONENT**

(71) Applicant: SZ DJI Technology Co., Ltd., Shenzhen, Guangdong 518057 (CN)
(72) Inventor: LI, Zhongqiang, Shenzhen, Guangdong 518057 (CN); LIN, Songrong, Shenzhen, Guangdong 518057 (CN)
(74) Representative: Appelt, Christian W.
(86) International application number: PCT/CN2018/096533
(87) International publication number: WO 2020/014986

(57) **Abstract**

A charging-discharging device, a charging method and a handheld gimbal assembly. The charging-discharging device (10) of the disclosure is applied to a gimbal handle (20) with a battery disposed inside, and the charging-discharging device (10) includes a body (1) and at least two electrical connection assemblies, the at least two electrical connection assemblies include a first electrical connection assembly (2) for and a second electrical connection assembly (3), the charging-discharging device (10) further includes a charging circuit, a discharging circuit, and a control circuit, the second electrical connection assembly (3) includes a plurality of interfaces, the charging circuit and the discharging circuit are respectively connected to different ones of the plurality of interfaces of the second electrical connection assembly (3), the control circuit obtains connection states of the plurality of interfaces of the second electrical connection assembly (3) and controls the charging circuit or the discharging circuit to work according to the connection states of the interfaces, thereby charging the gimbal handle (20) or charging the external device with the gimbal handle (20) as a power supply. The disclosure can conveniently charge and discharge the battery of the handheld gimbal.

## Description

### TECHNICAL FIELD

The present disclosure relates to the field of battery charging and, more particularly to a charging-discharging device, a charging method and a handheld gimbal assembly.

### BACKGROUND

Handheld gimbal can provide a stable and portable platform when images and videos are shot, which helps to improve the stability of image shooting, and has better environmental adaptability. Therefore, handheld gimbal has been more and more widely used.

Currently, a handheld gimbal usually has a gimbal body and a handle located below the gimbal body. In specific applications, a user can hold the handle and realize operations of the attitude stabilization and attitude adjustment of the gimbal body with the help of a built-in motor. In order to drive the motor, a battery is usually disposed at the handheld gimbal.

Usually, the battery is disposed inside the handle of the handheld gimbal. However, when the handle of the handheld gimbal is being charged, the gimbal can only sit idle and be used after the handle is charged. In addition, when it is not applicable and if the handheld gimbal needs to be put away, the remaining power needs to be drained with resting, which is time-consuming and causes the storage inconvenient.

### SUMMARY

Embodiments of the present disclosure provide a charging-discharging device, a charging method and a handheld gimbal assembly, which can conveniently charge and discharge a battery of the handheld gimbal.

In a first aspect, the present disclosure provides a charging-discharging device applied to a gimbal handle. A battery is disposed inside the gimbal handle. The charging-discharging device includes a body and at least two electrical connection assemblies. The at least two electrical connection assemblies include a first electrical connection assembly for connecting with the battery in the gimbal handle and a second electrical connection assembly for connecting with an external device. The first electrical connection assembly and the second electrical connection assembly are both arranged to be connected to the body. The charging-discharging device further includes a charging circuit, a discharging circuit, and a control circuit. The second electrical connection assembly includes a plurality of interfaces. The charging circuit and the discharging circuit are respectively connected to the plurality of interfaces of the second electrical connection assembly. The control circuit obtains connection states of the plurality of interfaces of the second electrical connection assembly and controls the charging circuit or the discharging circuit to work according to the connection states of the interfaces, thereby controlling to charge the gimbal handle or charge the external device with the gimbal handle as a power supply.

In a second aspect, the present disclosure provides a handheld gimbal assembly, which includes a gimbal handle, a gimbal electrically connected to the gimbal handle, and a charging-discharging device. The gimbal handle includes a built-in battery. When the gimbal handle is separated from the gimbal, the charging-discharging device can be electrically connected with the gimbal handle, where the charging-discharging device includes a body and at least two electrical connection assemblies. The at least two electrical connection assemblies include a first electrical connection assembly for connecting with the battery in the gimbal handle and a second electrical connection assembly for connecting with an external device. The first electrical connection assembly and the second electrical connection assembly are both arranged to be connected to the body. The charging-discharging device further includes a charging circuit, a discharging circuit, and a control circuit. The second electrical connection assembly includes a plurality of interfaces. The charging circuit and the discharging circuit are respectively connected to the plurality of interfaces of the second electrical connection assembly. The control circuit obtains connection states of the plurality of interfaces of the second electrical connection assembly and controls the charging circuit or the discharging circuit to work according to the connection states of the interfaces, thereby controlling to charge the gimbal handle or charge the external device with the gimbal handle as a power supply.

In a third aspect, the present disclosure provides a charging method applied to the above-described charging-discharging device. The charging method includes mounting the charging-discharging device at the gimbal handle to electrically connect the charging-discharging device with the battery in the gimbal handle, and performing charging or discharging of the battery according to a connection state of an electrical connection assembly of the charging-discharging device.

The present disclosure provides the charging and discharging device, the charging method and the handheld gimbal assembly. The charging-discharging device is applied to the gimbal handle to realize charging and discharging the handle and ensure a convenient storage. Moreover, the gimbal and the handle can be disassembled. While the gimbal handle is charging, the gimbal can be connected with a replacement handle to continue working.

### BRIEF DESCRIPTION OF THE DRAWINGS

To more clearly illustrate the embodiments of the present disclosure or the technical solution of the existing technologies, the accompanying drawings used in the description of the embodiments or the existing technologies are briefly described below. The drawings described below are merely some embodiments of the present disclosure. Other drawings may be derived from such drawings by a person with ordinary skill in the art without creative efforts.
FIG. 1 is a schematic diagram showing a connection between a charging-discharging device according to Embodiment 1 of the present disclosure and a gimbal handle.
FIG. 2 is a schematic diagram showing a connection between the gimbal handle shown in FIG. 1 and a gimbal.
FIG. 3 is a schematic structural diagram of a gimbal handle applied to the charging-discharging device according to Embodiment 1 of the present disclosure.
FIG. 4 is a schematic diagram of a top structure of the gimbal handle shown in FIG. 3.
FIG. 5 is a schematic exploded view of the charging-discharging device according to Embodiment 1 of the present disclosure.
FIG. 6 is a sectional view of the charging-discharging device according to Embodiment 1 of the present disclosure.
FIG. 7 is a schematic diagram of a bottom structure of the charging-discharging device according to Embodiment 1 of the present disclosure.
FIG. 8 is a schematic structural diagram of a handheld gimbal assembly according to Embodiment 2 of the present disclosure.
FIG. 9 is a schematic flowchart of a charging method according to Embodiment 3 of the present disclosure.

### Description of Reference Numerals:

1-Body; 2-First Electrical Connection assembly; 3-Second Electrical Connection assembly; 4-Circuit Board; 10-Charging-discharging device; 11-Protrusion; 12-Anti-slip Block; 13-First Avoidance Hole; 14-Elastic Member; 15-Fixation member; 16-Second Avoidance Hole; 17-Third Avoidance Hole; 20-Gimbal Handle; 21-First Electrical Connector; 22-Connection Block; 30-Gimbal; 31-Charging Interface; 32-Discharging Interface; 100-Handheld gimbal assembly; 121-Positioning Slot; 122-Positioning Protrusion; 131-Stop Step; 201-Mounting Interface; 202-Contact; 2011-Mounting Groove; la-Casing; 1b- Cover; 12a-Rough Surface.

### DETAILED DESCRIPTION OF THE EMBODIMENTS

To make the objectives, technical solutions, and advantages of the embodiments of the present disclosure clearer, the technical solutions in the embodiments of the present disclosure will be described clearly and completely with reference to the accompanying drawings. The described embodiments are only some of the embodiments of the present disclosure, rather than all the embodiments. Based on the embodiments of the present disclosure, all other embodiments obtained by a person of ordinary skill in the art without creative efforts shall fall within the scope of the present disclosure.

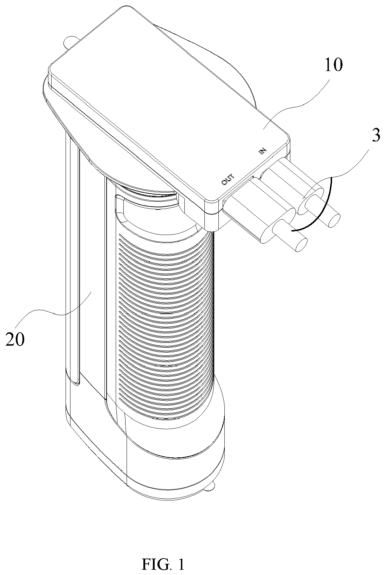

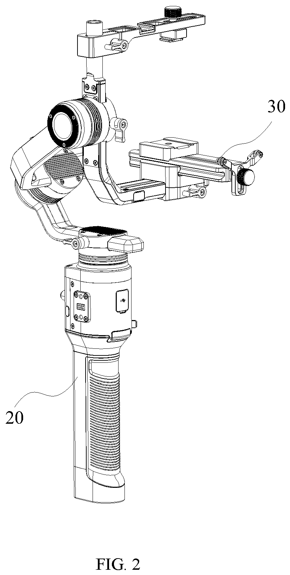

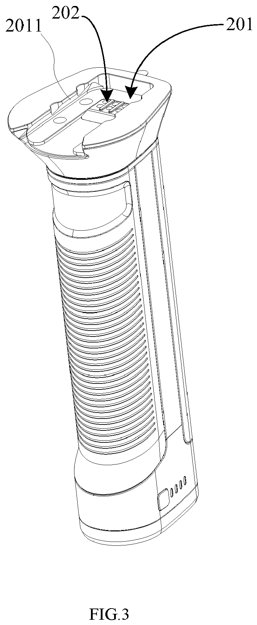

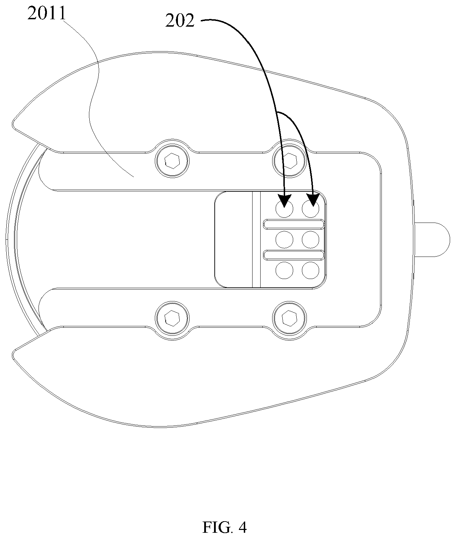

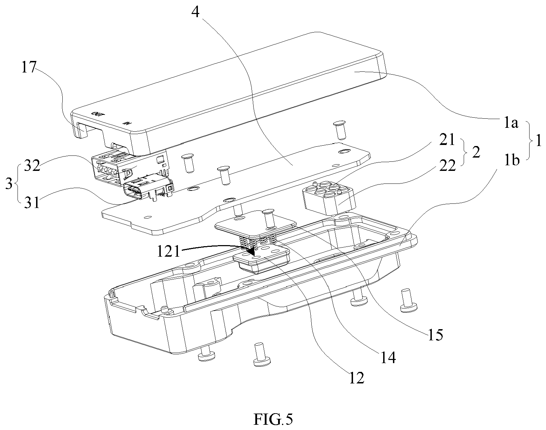

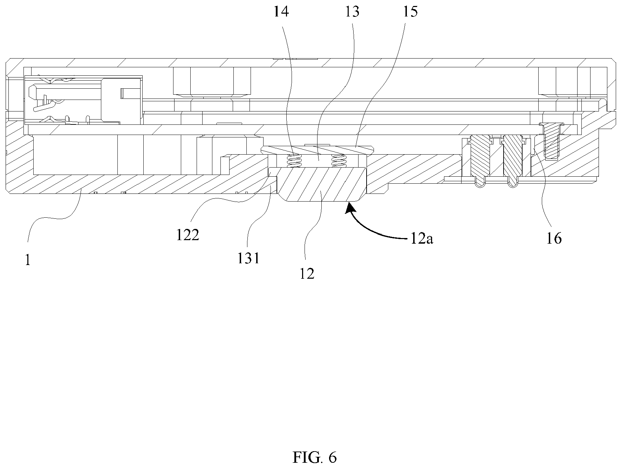

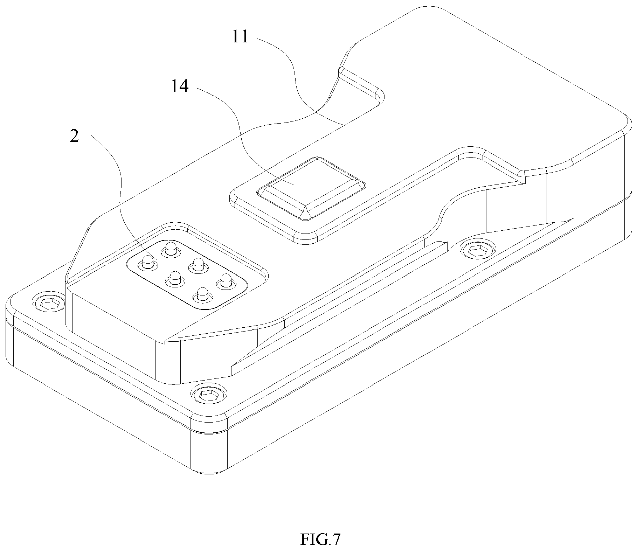

FIG. 1 is a schematic diagram showing a connection between a charging-discharging device according to Embodiment 1 of the present disclosure and a gimbal handle. FIG. 2 is a schematic diagram of a connection between the gimbal handle shown in FIG. 1 and a gimbal. FIG. 3 is a schematic structural diagram of a gimbal handle applied to the charging-discharging device according to Embodiment 1 of the present disclosure. FIG. 4 is a schematic diagram of a top structure of the gimbal handle shown in FIG. 3. FIG. 5 is a schematic exploded view of the charging-discharging device according to Embodiment 1 of the present disclosure. FIG. 6 is a sectional view of the charging-discharging device according to Embodiment 1 of the present disclosure. FIG. 7 is a schematic diagram of a bottom structure of the charging-discharging device according to Embodiment 1 of the present disclosure.

As shown in FIGs. 1 to 7, a charging-discharging device 10 in this embodiment is applied to a gimbal handle 20, and a battery is disposed inside the gimbal handle 20. The charging-discharging device 10 includes a body 1 and at least two electrical connection assemblies. The at least two electrical connection assemblies include a first electrical connection assembly 2 for connecting with the battery in the gimbal handle 20 and a second electrical connection assembly 3 for connecting with an external device. The first electrical connection assembly 2 and the second electrical connection assembly 3 are both arranged to be connected to the body 1. The charging-discharging device 10 further includes a charging circuit, a discharging circuit, and a control circuit (not shown in figures). The second electrical connection assembly 3 includes a plurality of interfaces. The charging circuit and the discharging circuit are respectively connected to the plurality of interfaces of the second electrical connection assembly 3. The control circuit obtains connection states of the plurality of interfaces of the second electrical connection assembly 3 and controls the charging circuit or the discharging circuit to work according to the connection states of the interfaces, thereby controlling to charge the gimbal handle 20 or charge the external device with the gimbal handle 20 as a power supply.

Specifically, in order to realize the operation of charging and discharging the battery in the gimbal handle 20, the charging-discharging device 10 includes at least two electrical connection assemblies, and different electrical connection assemblies can be respectively connected to the battery in the gimbal handle 20 or other external devices, so that the battery in the gimbal handle 20 can be connected with other external devices through the charging-discharging device 10 as a medium.

In order to realize the connection with a battery or an external device, the electrical connection assembly of the charging-discharging device 10 may include a first electrical connection assembly 2 and a second electrical connection assembly 3. The first electrical connection assembly 2 can be configured to achieve electrical connection with the battery in the gimbal handle 20, and the second electrical connection assembly 3 can be configured to achieve electrical connection with the external device. In addition, there might be multiple external devices and different types of external devices need to be charged or discharged. Accordingly, the second electrical connection assembly 3 may include a plurality of interfaces, so that different interfaces can be configured to connect to different external devices and perform charging or discharging.

In addition, the charging-discharging device 10 can select charging or external discharging operations according to the connection states of the first electrical connection assembly 2 and the second electrical connection assembly 3. Specifically, the charging-discharging device 10 further includes a charging circuit, a discharging circuit, and a control circuit. The charging circuit is configured to charge the battery of the gimbal handle 20, and the discharging circuit can be configured to discharge the battery to provide charging or power supply to the external device. The control circuit can obtain the connection states of various interfaces of the second electrical connection assembly 3, and according to the connection state of the interface, determine whether the external device currently connected to the charging-discharging device 10 is used to charge the gimbal handle 20 or uses the gimbal handle 20 as a power supply to charge the external device, so that the control circuit can control the charging circuit or the discharge circuit to work accordingly. Therefore, the external device can charge the gimbal handle 20, or the gimbal handle 20 can be used as a power supply to charge the external device.

In this way, by disposing multiple electrical connection assemblies at the charging-discharging device 10, it is possible to realize multiple operations such as charging the gimbal handle 20, using the gimbal handle 20 as a power supply for providing power or realizing a rapid discharge of the gimbal handle 20, so that the use of the gimbal handle 20 is relatively flexible, which effectively expands the functions and usage scenarios of the gimbal handle 20.

Optionally, the second electrical connection assembly 3 may include at least one charging interface 31 and at least one discharging interface 32. The control circuit can obtain the states of the charging interface 31 and the discharging interface 32. When the charging interface 31 is in a connected state, it means that an external device that can be used as a power supply is connected to the charging interface 31. In this situation, regardless of whether there is an external device connected to the discharging interface 32, the control circuit will control the charging circuit to charge the gimbal handle 20. There may be multiple charging interfaces 31 and discharging interfaces 32, so that the multiple various charging interfaces 31 and discharging interfaces 32 can adapt to external device interfaces of different specifications, or perform charging or discharging operations for multiple external devices at the same time.

As another optional implementation manner, when the discharging interface 32 is in a connected state and the charging interface 31 is in a disconnected state, it means that the external device needs the battery in the gimbal handle 20 as a power supply. In this situation, the control circuit controls the discharging circuit to charge the external device using the gimbal handle 20 as a power supply, therefore the electricity of the battery in the gimbal handle 20 is discharged.

When the charging-discharging device 10 is used to realize the connection with the gimbal handle 20, for a reliable fixation at the gimbal handle 20, as an optional implementation manner, a mounting interface 201 is disposed at a top of the gimbal handle 20 for detachably connecting with a gimbal 30, and the body 1 of the charging-discharging device 10 is matched and connected with the mounting interface 201.

The gimbal handle 20 and the gimbal 30 may be detachably connected, and the battery disposed inside the gimbal handle 20 may be configured to power the gimbal 30. The mounting interface 201 is disposed at the top of the gimbal handle 20 for detachably connecting with the gimbal 30, and the body 1 of the charging-discharging device 10 can also be mounted at the top of the gimbal handle 20 and matched and connected with the mounting interface 201. In this way, the gimbal 30 can be provided with multiple gimbal handles 20. When the battery in the gimbal handle 20 is low, the gimbal handle 20 can be removed from the gimbal 30 and replaced with a fully charged gimbal handle 20. The detached gimbal handle 20 can be connected to the charging-discharging device 10 for charging. In this way, the charging operation of the gimbal handle 20 by the charging-discharging device 10 does not affect the normal use of the gimbal 30, and a use efficiency of the gimbal 30 is relatively high.

Optionally, in order to facilitate the mounting and connection of the charging-discharging device 10 at the gimbal handle 20, the body 1 is correspondingly engaged with the mounting interface 101. An engagement structure with matching shapes can be disposed at the body 1 and the gimbal handle 20.

For example, as an optional engagement structure, the mounting interface 201 includes a mounting groove 2011, and a protrusion 11 that matches the mounting groove 2011 is disposed at a lower portion of the body 1 of the charging-discharging device 10. In this way, the protrusion 11 can be inserted into the mounting groove 2011 and abut against a groove wall or a groove bottom of the mounting groove 2011 to complete the engagement.

Optionally, for the engagement between the mounting groove 2011 and the protrusion 11, a sliding engagement manner may be adopted. A sliding groove matching the shape of the mounting groove 2011 can be formed at a side of the protrusion 11, and the sliding groove is used for allowing the body 1 to slide relative to and engage with the mounting interface 101. Generally, the extending direction of the sliding groove usually intersects or even is perpendicular to the longitudinal direction of the gimbal handle 20, so that the protrusions at the body 1 can slide into the mounting groove laterally, and the engagement fixation between the charging-discharging device 10 and the gimbal handle 20 can be completed. Since the protrusion 11 and the mounting groove 2011 need to slide relative to each other for a certain distance to complete the engagement or release the engagement, it is not easy for the charging-discharging device 10 to fall off the gimbal handle 20, and the fixation is relatively reliable.

Since the charging-discharging device 10 includes electrical connection assemblies and various circuits, in order to protect these electrical connection assemblies and circuits, optionally, a hollow structure with a cavity is disposed at the body 1 of the charging-discharging device 10, and both the first electrical connection assembly 2 and the second electrical connection assembly 3 are at least partially disposed in the cavity. The cavity of the body 1 can be configured to accommodate the first electrical connection assembly 2 and the second electrical connection assembly 3, and shield and protect the first electrical connection assembly 2 and the second electrical connection assembly 3. In addition, an opening is generally disposed at the cavity, so that the interfaces of the first electrical connection assembly 2 and the second electrical connection assembly 3 are open to the air or protrude outward from the cavity.

Specifically, as an optional implementation manner, the body 1 includes a casing 1a and a cover 1b, and the casing 1a and the cover 1b are put together to form a cavity. In this way, since the cover 1b can be opened and closed relative to the casing 1a, the electrical connection assemblies and circuits can be disposed inside the casing 1a through an opening of the casing 1a, and then the cover 1b can be closed on the casing 1a to form a complete structure of the body 1.

In order to dispose various circuits, optionally, a circuit board 4 may be disposed at the body 1 of the charging-discharging device 10. The charging circuit, the discharging circuit, and the control circuit are disposed at the circuit board 4. Both the first electrical connection assembly 2 and the second electrical connection assembly 3 are electrically connected to the circuit board 4. In this way, the circuit board 4 can be used as a carrier to install the charging circuit, the discharging circuit and the control circuit.

The circuit board 4 can be of many different types and styles. Optionally, the circuit board 4 may generally be a printed circuit board (PCB). In addition, the circuit board 4 can also be another type of circuit board commonly used by those skilled in the art, such as a flexible circuit board, which is not limited here.

Specifically, the number of the circuit board 4 may be one or more. When there are multiple circuit boards 4, the charging circuit, the discharging circuit, and the control circuit can be respectively disposed at different circuit boards, and the respective circuit boards can be electrically connected by connecting wires such as cables.

When the charging-discharging device 10 charges the battery of the gimbal handle 20, or uses the battery as a power supply to provide power to external devices, if the voltage or current is too large, the battery may heat up and the charging-discharging device 10 or the battery of the gimbal handle 20 may even be damaged. In order to limit the voltage and current while charging or providing power, as an optional implementation manner, the circuit board 4 is also provided with any one or more of the following circuits: an over current protection circuit, an overvoltage protection circuit, or a thermal protection circuit.

In some embodiments, the overcurrent protection circuit is configured to stop charging-discharging when the charging-discharging current of the charging-discharging device 10 is greater than a preset current threshold. The overvoltage protection circuit is configured to stop charging-discharging when the charging-discharging voltage of the charging-discharging device 10 is greater than a preset voltage threshold. The thermal protection circuit is configured to stop charging-discharging when a battery temperature is greater than a preset temperature threshold.

Specifically, the preset current threshold, the preset voltage threshold, and the preset temperature threshold can all be freely set according to the specifications of the battery and the usage needs of the gimbal handle 20. In this way, when any one or more of the charging-discharging current, the charging-discharging voltage, or the battery temperature of the charging-discharging device 10 exceeds the preset threshold, it means that the charging-discharging device 10 is in an abnormal working state. The above-described overcurrent protection circuit, overvoltage protection circuit, or thermal protection circuit is configured to stop the charging-discharging process of the battery, so as to avoid damages to the battery, the charging-discharging device 10, or the external device.

In addition, optionally, the body 1 is provided with an anti-slip block 12 that can extend toward the gimbal handle 20. When the anti-slip block 12 and the body 1 are elastically connected, and the body 1 and the mounting interface 201 are correspondingly connected, the bottom of the anti-slip block 12 abuts at the gimbal handle 20. In this way, the anti-slip block 12 can abut against the gimbal handle 20, and there is a certain friction between the bottom of the anti-slip block 12 and the gimbal handle 20, therefore the charging-discharging device 10 is prevented from slipping off the gimbal handle 20.

Further, in order to improve the friction between the anti-slip block 12 and the gimbal handle 20, optionally, the bottom of the non-skip block may have a rough surface 12a. In this way, the friction between the anti-slip block 12 and the gimbal handle 20 is relatively large, which can prevent relative sliding between the anti-slip block 12 and the gimbal handle 20, and improve the reliability of the anti-slip block 12 when abutting.

Specifically, the anti-slip block 12 may be disposed at the body 1 of the charging-discharging device 10 through various structures and connection methods. For example, the anti-slip block 12 may be located outside an outer surface of the body 1 and abut against the gimbal handle 20, or the anti-slip block may be located inside the cavity of the body 1 and only partly protrude from the cavity and abut against the gimbal handle 20. As an optional implementation manner, a first avoidance hole 13 is disposed at the bottom of the body 1 for communicating the inner and outer sides of the cavity, and the anti-slip block 12 is located in the first avoidance hole 13. In this way, the anti-slip block 12 can be housed in the body 1, so that the anti-slip block 12 does not affect the overall size of the charging-discharging device 10, and at the same time, can normally protrude from the first avoidance hole 13 and abut against the gimbal handle 20.

In order to make the anti-slip block 12 abut against the gimbal handle 20, a pressure needs to be provided to the anti-slip block 12 in a direction toward the gimbal handle 20. As an optional implementation manner, an elastic member 14 may be disposed between the anti-slip block 12 and the body 1. The elastic member 14 itself can be deformed, so the anti-slip block 12 can be pressed against the gimbal handle 20 by the elastic force of the elastic member 14 to complete the abutment between the anti-slip block 12 and the gimbal handle 20.

In order to provide support for the elastic member 14, further, a fixation member 15 is disposed inside the body 1. One end of the elastic member 14 is connected to the fixation member 15, and the other end of the elastic member 14 is connected to the anti-slip block 12, where the fixation member 15 can be connected to the elastic member 14 by means of clamping, bonding or a limiting structure.

When the anti-slip block 12 is pressed against the gimbal handle 20 under the elastic force of the elastic member 14, and abuts against the gimbal handle 20, in order to make the bottom of the anti-slip block 12 and the gimbal handle 20 evenly contact, the elastic force of the elastic member 14 should be evenly applied to all parts of the anti-slip block 12. Therefore, optionally, there may be a plurality of elastic members 14 and the plurality of elastic members 14 are disposed at intervals.

In this way, the plurality of elastic members 14 can apply elastic force to various parts of the anti-slip block 12, so that the anti-slip block 12 can maintain a normal downward posture under the elastic force of the elastic member 14, and make the bottom surface of the anti-slip block 12 and the gimbal handle 20 contact evenly.

Specifically, the elastic member 14 can be of many different structures and types. For example, in an optional manner, the elastic member 14 may be a pressure spring. In addition, the elastic member 14 may also be another elastic structure commonly used by those skilled in the art, such as an elastic block, which is not repeated here.

In order to realize the connection between the elastic member 14 and the anti-slip block 12, optionally, a positioning slot 121 for receiving the elastic member 14 may be disposed at the top of the anti-slip block 12. In this way, the elastic member 14 can be fixed in the positioning slot 121. When the elastic member 14 is elastically deformed, the positioning slot 121 restricts the position of the elastic member 14 to prevent the elastic member 14 from escaping from the anti-slip block 12.

Since the elastic member 14 provides the anti-slip block with an elastic force pointing to the outer side of the body 1, in order to prevent the anti-slip block 12 from detaching from the body 1 under the action of the elastic force, a limiting structure needs to be disposed at the body 1 for restricting the anti-slip block 12 from detaching. Optionally, a positioning protrusion 122 protruding outwards is disposed at a side of the anti-slip block, and a stop step 131 that matches the positioning protrusion 122 is disposed at the hole wall of the first avoidance hole 13. The stop step 131 is configured to limit a distance that the anti-slip block 12 extends to the gimbal handle 20. In this way, when the anti-slip block 12 moves outwards, it can be blocked by the stop step 131 and can only move in the first avoidance hole 13.

Generally, in order to be connected to an external circuit, the battery disposed inside the gimbal handle 20 usually includes a plurality of exposed contacts 202, and these contacts 202 are electrically connected to the positive and negative electrodes of the battery. Therefore, in order to achieve electrical connection between the charging-discharging device 10 and the gimbal handle 20, optionally, the first electrical connection assembly 2 may include a plurality of first electrical connectors 21, and these first electrical connectors 21 are used for connecting to the contacts 202 of the battery in the gimbal handle 20 in a one-to-one correspondence. In some embodiments, the first electrical connector 21 is usually in a form of a contact pin or a spring, etc., and is contacted and connected with the contact 202 of the battery and conducted.

Optionally, in order to be in contact with the contact 202 of the battery, the first electrical connector 21 may be an elastic electrical connector. In this way, the first electrical connector 21 can abut against the contact 202 of the battery by its own structure or elasticity of the material.

Specifically, as an optional electrical connector type, a Pogo pin connector can be used as the first electrical connector 21. The Pogo pin connector includes a precise spring structure disposed at the inside, has good mechanical and electrical properties, and can achieve an accurate and reliable contact connection with the contact 202 to complete the electrical conduction between the charging-discharging device 10 and the battery.

In addition, in order to connect the plurality of first electrical connectors 21 to the body 1 of the charging-discharging device 10, optionally, the first electrical connection assembly 2 further includes a connection block 22 and the connection block 22 is fixed at the cavity of the body 1. The first electrical connectors 21 are all disposed at the connection block 22. In this way, all the first electrical connectors 21 can be integrated at the connection block 22 and supported by the connection block 22, so as to be effectively and reliably fixed.

Since the charging-discharging device 10 is generally connected to the top of the gimbal handle 20, correspondingly, the first electrical connectors 21 can all point to the outer side of the bottom of the body 1. In this way, when the charging-discharging device 10 is located at the top of the gimbal handle 20, the first electrical connector 21 can naturally point to the gimbal handle 20 and be connected to the contact 202 of the battery.

Because the first electrical connector 21 is usually positioned by the connection block 22 fixed at the cavity of the body 1, in order to allow the first electrical connector 21 to contact the contact 202 of the battery, optionally, a second avoidance hole 16 is disposed at the bottom of the body 1 for exposing the first electrical connector 21. In this way, the first electrical connector 21 can protrude from the second avoidance hole 16 and contact with the contact 202 on the gimbal handle 20.

In order to connect and conduct with external devices, the second electrical connection assembly 3 of the charging-discharging device 10 can be of different types and structures. As an optional setting manner, sizes of the charging interface 31 and the discharging interface 32 of the second electrical connection assembly 3 are different. In this way, when a user chooses whether to charge the battery of the gimbal handle 20 or use the gimbal handle 20 as a power supply for providing power and discharge, the user can intuitively select by identifying different interface sizes, thereby avoiding wrong interface connections.

In order to facilitate connections with external devices, optionally, among the plurality of interfaces of the second electrical connection assembly 3, the charging interface 31 and the discharging interface 32 are usually disposed side by side, and orientations of the charging interface 31 and the discharging interface 32 are the same. In this way, it is convenient for the user to switch and connect between different interfaces, which improves the convenience of operations.

Because the external device usually has structures with a larger size, or is connected to the charging interface 31 or the discharging interface 32 of the second electrical connection assembly through a long external cable, in order to avoid the interference between the external device and the gimbal handle 20, in an optional implementation manner, both the charging interface 31 and the discharging interface 32 face a side of the body 1. In this way, the outer space of the charging interface 31 and the discharging interface 32 is not blocked by the gimbal handle 20, which facilitates the connection and placement of external devices.

The charging interface 31 and the discharging interface 32 can be of different types. For example, optionally, the charging interface may be a USB type-C interface. This interface is the same as the charging interface 31 of a mobile terminal such as a mobile phone, or a tablet computer, so it can be applied to many more charging devices. The discharging interface may be a universal serial bus (USB) interface. The USB interface is suitable for most portable power consumption devices, so the gimbal handle 20 can charge many more types of external devices.

Similar to the first electrical connection assembly, the second electrical connection assembly is also at least partially housed in the cavity of the body 1 of the charging-discharging device 10. Therefore, optionally, a third avoidance hole 17 is disposed at the side of the body 1 for exposing the second electrical connection assembly 3. The third avoidance hole 17 can expose the interface of the second electrical connection assembly 3 so as to make an electrical connection between the second electrical connection assembly 3 and the external device.

Since the second electrical connection assembly 3 includes multiple interfaces, correspondingly, as an optional implementation manner, there may be multiple third avoidance holes 17, and the shapes of the multiple third avoidance holes 17 match the shapes of the charging interfaces 31 or the discharging interfaces 32 respectively. In this way, the third avoidance hole 17 only exposes the charging interface 31 and the discharging interface 32, while the other parts of the second electrical connection assembly 3 are still hidden in the cavity of the body 1, thereby the body 1 has a better protection to the second electrical connection assembly 3, and a more beautiful appearance.

In this embodiment, the charging-discharging device is applied to the gimbal handle, and the battery is disposed inside the gimbal handle. The charging-discharging device includes the body and at least two electrical connection assemblies. The at least two electrical connection assemblies include the first electrical connection assembly for connecting with the battery in the gimbal handle and the second electrical connection assembly for connecting with external devices. The first electrical connection assembly and the second electrical connection assembly are both arranged to be connected to the body. The charging-discharging device further includes the charging circuit, the discharging circuit, and the control circuit. The second electrical connection assembly includes a plurality of interfaces. The charging circuit and the discharging circuit are respectively connected to the plurality of interfaces of the second electrical connection assembly. The control circuit obtains connection states of the plurality of interfaces of the second electrical connection assembly and controls the charging circuit or the discharging circuit to work according to the connection states of the interfaces, thereby controlling to charge the gimbal handle or charge the external device with the gimbal handle as a power supply. In this way, by disposing multiple electrical connection assemblies at the charging-discharging device, it is possible to realize multiple operations such as charging the gimbal handle, using the gimbal handle as a power supply for providing power, so that the use of the gimbal handle is relatively flexible, which effectively expands the functions and usage scenarios of the gimbal handle.

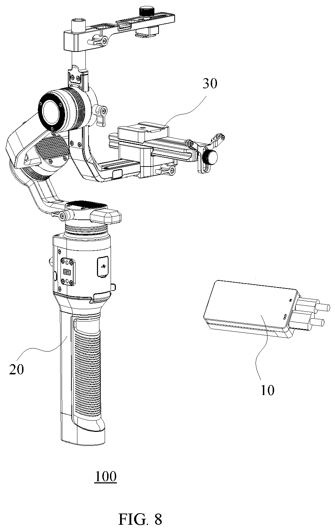

FIG. 8 is a schematic structural diagram of a handheld gimbal assembly according to Embodiment 2 of the present disclosure. In this embodiment, the handheld gimbal assembly 100 includes a gimbal handle 20, a gimbal 30 electrically connected to the gimbal handle 20, and a charging-discharging device 10. The gimbal handle 20 includes a built-in battery. When the gimbal handle 20 and the gimbal 30 is separated, the charging-discharging device 10 can be electrically connected to the gimbal handle 20. The charging-discharging device 10 of the gimbal handle assembly 100 may have structures, functions, and working principles similar to those of the charging-discharging device in Embodiment 1, which is not repeated here.

The charging-discharging device 10 includes a body and at least two electrical connection assemblies. The at least two electrical connection assemblies include a first electrical connection assembly for connecting with the battery in the gimbal handle 20 and a second electrical connection assembly for connecting with external devices. The first electrical connection assembly and the second electrical connection assembly are both arranged to be connected to the body. The charging-discharging device 10 further includes a charging circuit, a discharging circuit, and a control circuit. The second electrical connection assembly includes a plurality of interfaces. The charging circuit and the discharging circuit are respectively connected to the plurality of interfaces of the second electrical connection assembly. The control circuit obtains connection states of the plurality of interfaces of the second electrical connection assembly and controls the charging circuit or the discharging circuit to work according to the connection states of the interfaces, thereby controlling to charge the gimbal handle 20 or charge the external device with the gimbal handle 20 as a power supply.

Specifically, the gimbal handle 20 and the gimbal 30 of the handheld gimbal assembly 100 are usually detachably connected, and when the gimbal handle 20 and the gimbal 30 are separated, the charging-discharging device 10 can be electrically connected to the gimbal handle 20, and charge the gimbal handle 20 or use the gimbal handle 20 to charge other external devices.

In order to realize a connection with the battery or the external device, the electrical connection assembly of the charging-discharging device 100 may include the first electrical connection assembly and the second electrical connection assembly. The first electrical connection assembly can be configured to electrically connect to the battery of the gimbal handle 20, and the second electrical connection assembly can be configured to electrically connect to an external device. In addition, the second electrical connection assembly can include a plurality of interfaces. In this way, various interfaces can be configured to connect to various external devices and perform charging or discharging operations respectively.

At the same time, the charging-discharging device 100 further includes a charging circuit, a discharging circuit, and a control circuit. In some embodiments, the charging circuit is configured to charge the battery of the gimbal handle 20, and the discharging circuit can be configured to discharge the electricity of the battery to provide charging or power supply to the external device. The control circuit can obtain the connection states of various interfaces of the second electrical connection assembly, and according to the connection state of the interface, determine whether the external device currently connected to the charging-discharging device 100 is used to charge the gimbal handle 20 or uses the gimbal handle 20 as a power supply, so that the control circuit can control the charging circuit or the discharge circuit to work accordingly. Therefore, the external device can charge the gimbal handle 20, or the gimbal handle 20 can be used as a power supply to charge the external device.

Optionally, the second electrical connection assembly includes at least one charging interface and at least one discharging interface. The control circuit obtains the states of the charging interface and the discharging interface. When the charging interface is in a connected state, the charging circuit is controlled to charge the gimbal handle 20.

Further, as another optional implementation manner, when the discharging interface is in a connected state and the charging interface is in a disconnected state, the control circuit controls the discharging circuit to use the gimbal handle 20 as the power supply to charge the external device, therefore the electricity of the battery of the gimbal handle 20 is discharged.

In order to realize the connection between the gimbal handle 20 and the charging-discharging device 100, optionally, a mounting interface for detachably connecting with the gimbal 30 is disposed at the top of the gimbal handle 20, and the body is matched and connected with the mounting interface.

Optionally, in order to fix the charging-discharging device 100 at the top of the gimbal handle 20, an anti-slip block that can extend toward the gimbal handle 20 is disposed at the body. The anti-slip block and the body are elastically connected, and when the body and the mounting interface are correspondingly connected, the bottom of the anti-slip block abuts against the gimbal handle 20.

In order to be electrically connected to the battery of the gimbal handle 20, as an optional structure, the first electrical connection assembly may include a plurality of first electrical connectors, and the first electrical connectors are used for connecting to the contacts of the battery in the gimbal handle in a one-to-one correspondence.

In this embodiment, the handheld gimbal assembly includes a gimbal handle, a gimbal electrically connected to the gimbal handle, and a charging-discharging device. The gimbal handle includes a built-in battery. When the gimbal handle and the gimbal is separated, the charging-discharging device can be electrically connected to the gimbal handle. The charging-discharging device includes the body and at least two electrical connection assemblies. The at least two electrical connection assemblies include the first electrical connection assembly for connecting with the battery in the gimbal handle and the second electrical connection assembly for connecting with external devices. The first electrical connection assembly and the second electrical connection assembly are both arranged to be connected to the body. The charging-discharging device further includes the charging circuit, the discharging circuit, and the control circuit. The second electrical connection assembly includes a plurality of interfaces. The charging circuit and the discharging circuit are respectively connected to the plurality of interfaces of the second electrical connection assembly. The control circuit obtains connection states of the plurality of interfaces of the second electrical connection assembly and controls the charging circuit or the discharging circuit to work according to the connection states of the interfaces, thereby controlling to charge the gimbal handle or charge the external device with the gimbal handle as a power supply. In this way, the charging-discharging device of the handheld gimbal assembly can charge the gimbal handle, and use the gimbal handle as a power supply for various operations. Therefore, the use of the gimbal handle is relatively flexible, which effectively expands the functions and usage scenarios of the gimbal handle.

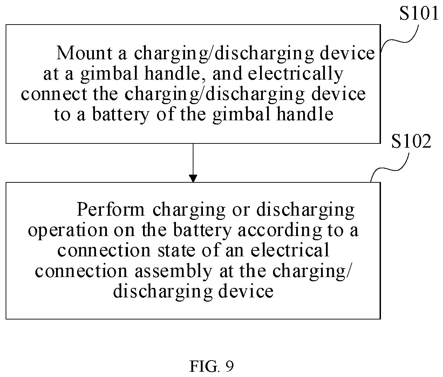

FIG. 9 is a schematic flowchart of a charging method according to Embodiment 3 of the present disclosure. As shown in FIG. 9, the charging method provided in this embodiment can be applied to the charging-discharging devices described in Embodiment 1 and Embodiment 2. The charging method specifically includes the following processes.

At S101, a charging-discharging device is mounted at a gimbal handle, and the charging-discharging device is electrically connected to the battery of the gimbal handle.

When the battery of the gimbal handle is low and needs to be charged, or when an external device needs to be powered by the gimbal handle, the gimbal handle can be separated from the gimbal and the charging-discharging device can be mounted at the gimbal handle. At the same time, the charging-discharging device is electrically connected to the battery of the gimbal handle, so that the battery can be connected to the external device through the charging-discharging device.

At S102, charging or discharging operation is performed on the battery according to a connection state of an electrical connection assembly at the charging-discharging device.

Among the electrical connection assemblies of the charging-discharging device, a second electrical connection assembly includes a plurality of interfaces, and various interfaces can respectively correspond to charging or discharging operations. Therefore, a type of the external device connected to the charging-discharging device can be determined according to the connection state of the electrical connection assembly, and the corresponding charging or discharging operation can be performed.

Specifically, this process specifically includes the following sub-processes.

When only a discharge interface is connected to the external device in the electrical connection assembly, the charging-discharging device discharges the battery.

When only a charging interface is connected to the external device in the electrical connection assembly, the charging-discharging device charges the battery.

When the charging interface and the discharging interface in the electrical connection assembly are simultaneously connected to the external device, the charging-discharging device charges the battery.

In some embodiments, the external device is a power supply or a power consumption device.

In this way, according to the connection states of the charging interface and the discharging interface, the charging-discharging device can be controlled to charge or discharge the battery accordingly, so as to charge the battery with a power supply, or use the battery to supply power to the power consumption device.

In addition, in order to avoid overcharging of the battery, optionally, after the process of S102, the charging method further includes the following processes.

When a charging parameter of the battery exceeds a preset threshold, the charging operation of the battery is suspended, where the charging parameter includes at least one of a charging voltage, a charging current, or a charging temperature.

In this way, the charging-discharging device can detect the charging parameters of the battery, and suspend the charging of the battery when the battery charging parameter exceeds the preset threshold, so as to prevent the battery from overheating or even damage.

In this embodiment, the charging method includes mounting the charging-discharging device at the gimbal handle, electrically connecting the charging-discharging device to the battery of the gimbal handle, and then performing charging or discharging operations on the battery according to the connection state of an electrical connection assembly at the charging-discharging device. In this way, selecting the charging or discharging operation according to the connection states of different electrical connection assemblies can realize multiple operations such as charging the gimbal handle and using the gimbal handle as the power supply to provide power. Therefore, the use of the gimbal handle is relatively flexible, which effectively expands the functions and usage scenarios of the gimbal handle.

A person of ordinary skill in the art can understand that all or part of the processes in the foregoing method embodiments can be implemented by a program instructing relevant hardware. The program can be stored in a computer readable storage medium. When the program is executed, the processes including the foregoing method embodiments are executed. The storage medium includes a medium that can store the program code, such as a ROM, a RAM, a magnetic disk, or an optical disk.

Finally, it should be noted that the above embodiments are only used to illustrate the technical solutions of the present disclosure, but not to limit it. Although the present disclosure has been described in detail with reference to the foregoing embodiments, those of ordinary skill in the art should understand that it is still possible to modify the technical solutions described in the foregoing embodiments, or equivalently replace some or all of the technical features. These modifications or replacements do not make the essence of the corresponding technical solutions deviate from the technical solutions of the embodiments of the present disclosure.

## Claims

1. A charging-discharging device applied to a gimbal handle, wherein a battery is disposed inside the gimbal handle, the charging-discharging device includes a body and at least two electrical connection assemblies, the at least two electrical connection assemblies include a first electrical connection assembly for connecting with the battery in the gimbal handle and a second electrical connection assembly for connecting with an external device, the first electrical connection assembly and the second electrical connection assembly are both arranged to be connected to the body, the charging-discharging device further includes a charging circuit, a discharging circuit, and a control circuit, the second electrical connection assembly includes a plurality of interfaces, the charging circuit and the discharging circuit are respectively connected to different ones of the plurality of interfaces of the second electrical connection assembly, the control circuit obtains connection states of the plurality of interfaces of the second electrical connection assembly and controls the charging circuit or the discharging circuit to work according to the connection states of the interfaces, thereby controlling to charge the gimbal handle or charge the external device with the gimbal handle as a power supply.

2. The charging-discharging device of claim 1, wherein the second electrical connection assembly includes at least one charging interface and at least one discharging interface, the control circuit obtains states of the charging interface and the discharging interface, and when the charging interface is in a connected state, the charging circuit is controlled to charge the gimbal handle.

3. The charging-discharging device of claim 2, wherein when the discharging interface is in a connected state and the charging interface is in a disconnected state, the control circuit controls the discharging circuit to charge the external device using the gimbal handle as a power supply.

4. The charging-discharging device of any of claims 1-3, wherein a mounting interface is disposed at a top of the gimbal handle for detachably connecting with a gimbal, and the body is matched and connected with the mounting interface.

5. The charging-discharging device of the claim 4, wherein the body is correspondingly engaged with the mounting interface.

6. The charging-discharging device of claim 5, wherein the mounting interface includes a mounting groove, and a protrusion that matches the mounting groove is disposed at a lower portion of the body.

7. The charging-discharging device of claim 6, wherein a sliding groove matching a shape of the mounting groove is formed at a side of the protrusion, and the sliding groove is used for allowing the body to slide relative to and engage with the mounting interface.

8. The charging-discharging device of claim 4, wherein the body is a hollow structure with a cavity, and both the first electrical connection assembly and the second electrical connection assembly are at least partially disposed in the cavity,

9. The charging-discharging device of claim 8, wherein a circuit board is disposed at the body, the charging circuit, the discharging circuit, and the control circuit are disposed at the circuit board, and both the first electrical connection assembly and the second electrical connection assembly are electrically connected to the circuit board.

10. The charging-discharging device of claim 9, wherein the circuit board is a printed circuit board.

11. The charging-discharging device of claim 9 or 10, wherein the circuit board is provided with any one or more of the following circuits: an over current protection circuit, an overvoltage protection circuit, a thermal protection circuit, wherein:
the overcurrent protection circuit is configured to stop charging-discharging when a charging-discharging current of the charging-discharging device is greater than a preset current threshold;
the overvoltage protection circuit is configured to stop charging-discharging when a charging-discharging voltage of the charging-discharging device is greater than a preset voltage threshold;
the thermal protection circuit is configured to stop charging-discharging when a battery temperature is greater than a preset temperature threshold.

12. The charging-discharging device of claim 8, wherein the body is provided with an anti-slip block that can extend toward the gimbal handle, and when the anti-slip block and the body are elastically connected, and the body and the mounting interface are correspondingly connected, a bottom of the anti-slip block abuts against the gimbal handle.

13. The charging-discharging device of claim 12, wherein the bottom of the non-skip block has a rough surface.

14. The charging-discharging device of claim 13, wherein a first avoidance hole is disposed at a bottom of the body communicating inner and outer sides of the cavity, and the anti-slip block is located in the first avoidance hole.

15. The charging-discharging device of claim 14, wherein an elastic member is disposed between the anti-slip block and the body.

16. The charging-discharging device of claim 15, wherein a fixation member is disposed inside the body, one end of the elastic member is connected to the fixation member, and another end of the elastic member is connected to the anti-slip block.

17. The charging-discharging device of claim 16, wherein there are a plurality of elastic members and the plurality of elastic members are disposed at intervals.

18. The charging-discharging device of claim 15, wherein the elastic member is a pressure spring.

19. The charging-discharging device of claim 15, wherein a positioning slot for receiving the elastic member is disposed at a top of the anti-slip block.

20. The charging-discharging device of any of claims 14-19, wherein a positioning protrusion protruding outwards is disposed at a side of the anti-slip block, a stop step that matches the positioning protrusion is disposed at a hole wall of the first avoidance hole, and the stop step is configured to limit a distance that the anti-slip block extends to the gimbal handle.

21. The charging-discharging device of claim 8, wherein the first electrical connection assembly includes a plurality of first electrical connectors, and the first electrical connectors are used for connecting to contacts of the battery in the gimbal handle in a one-to-one correspondence.

22. The charging-discharging device of claim 21, wherein the first electrical connector is an elastic electrical connector.

23. The charging-discharging device of claim 22, wherein the first electrical connector is a Pogo pin connector.

24. The charging-discharging device of any of claims 21-23, wherein the first electrical connection assembly further includes a connection block, the connection block is fixed at the cavity of the body, and the first electrical connectors are all disposed at the connection block.

25. The charging-discharging device of any of claims 21-23, wherein the first electrical connectors all point to outer side of the bottom of the body.

26. The charging-discharging device of any of claims 21-23, wherein a second avoidance hole is disposed at the bottom of the body for exposing the first electrical connectors.

27. The charging-discharging device of claim 2 or 3, wherein sizes of the charging interface and the discharging interface of the second electrical connection assembly are different.

28. The charging-discharging device of claim 2 or 3, wherein the charging interface and the discharging interface are disposed side by side, and orientations of the charging interface and the discharging interface are same.

29. The charging-discharging device of claim 28, wherein both the charging interface and the discharging interface face a side of the body.

30. The charging-discharging device of claim 2 or 3, wherein the charging interface is a USB type-C interface.

31. The charging-discharging device of claim 2 or 3, wherein the discharging interface is a universal serial bus (USB) interface.

32. The charging-discharging device of claim 8, wherein a third avoidance hole is disposed at the side of the body for exposing the second electrical connection assembly.

33. The charging-discharging device of claim 32, wherein there are multiple third avoidance holes, and the shapes of the multiple third avoidance holes match the shapes of the charging interfaces or the discharging interfaces respectively.

34. The charging-discharging device of claim 8, wherein the body includes a casing and a cover, and the casing and the cover are put together to form the cavity.

35. A handheld gimbal assembly comprising a gimbal handle, a gimbal electrically connected to the gimbal handle, and a charging-discharging device, wherein:
the gimbal handle includes a built-in battery, and when the gimbal handle and the gimbal are separated, the charging-discharging device can be electrically connected to the gimbal handle; and
the charging-discharging device includes a body and at least two electrical connection assemblies, the at least two electrical connection assemblies include a first electrical connection assembly for connecting with the battery in the gimbal handle and a second electrical connection assembly for connecting with external devices, the first electrical connection assembly and the second electrical connection assembly are both arranged to be connected to the body, the charging-discharging device further includes a charging circuit, a discharging circuit, and a control circuit, the second electrical connection assembly includes a plurality of interfaces, the charging circuit and the discharging circuit are respectively connected to different ones of the plurality of interfaces of the second electrical connection assembly, and the control circuit obtains connection states of the plurality of interfaces of the second electrical connection assembly and controls the charging circuit or the discharging circuit to work according to the connection states of the interfaces, thereby controlling to charge the gimbal handle or charge the external device with the gimbal handle as a power supply.

36. The handheld gimbal assembly of claim 35, wherein the second electrical connection assembly includes at least one charging interface and at least one discharging interface, the control circuit obtains states of the charging interface and the discharging interface, and when the charging interface is in a connected state, the charging circuit is controlled to charge the gimbal handle.

37. The handheld gimbal assembly of claim 36, wherein when the discharging interface is in a connected state and the charging interface is in a disconnected state, the control circuit controls the discharging circuit to charge the external device using the gimbal handle as a power supply.

38. The handheld gimbal assembly of any of claims 35-37, wherein a mounting interface is disposed at a top of the gimbal handle for detachably connecting with the gimbal, and the body is matched and connected with the mounting interface.

39. The handheld gimbal assembly of claim 38, wherein the body is provided with an anti-slip block that can extend toward the gimbal handle, and when the anti-slip block and the body are elastically connected, and the body and the mounting interface are correspondingly connected, the bottom of the anti-slip block abuts against the gimbal handle.

40. The handheld gimbal assembly of claim 38, wherein the first electrical connection assembly includes a plurality of first electrical connectors, and these first electrical connectors are used for connecting to contacts of the battery in the gimbal handle in a one-to-one correspondence.

41. A charging method applied to a charging-discharging device of any of claims 1-34, comprising:
mounting the charging-discharging device at a gimbal handle, and electrically connecting the charging-discharging device to a battery of the gimbal handle; and
performing charging or discharging operation on the battery according to a connection state of an electrical connection assembly at the charging-discharging device.

42. The charging method of claim 41, wherein performing charging or discharging operations on the battery according to the connection state of the electrical connection assembly at the charging-discharging device includes:
when only a discharge interface is connected to an external device in the electrical connection assembly, the charging-discharging device discharging the battery;
when only a charging interface is connected to an external device in the electrical connection assembly, the charging-discharging device charging the battery;
when the charging interface and the discharging interface in the electrical connection assembly are simultaneously connected to an external device, the charging-discharging device charging the battery;
wherein the external device is a power supply or a power consumption device.

43. The charging method of claim 41 or 42, wherein performing charging or discharging operations on the battery according to the connection state of the electrical connection assembly at the charging-discharging device includes:
when a charging parameter of the battery exceeds a preset threshold, suspending the charging operation of the battery, wherein the charging parameter includes at least one of a charging voltage, a charging current, or a charging temperature.
